# EUROPEAN PATENT SPECIFICATION

(11) **EP 1 355 097 B1**
(45) Date of publication and mention of the grant of the patent: **28.09.2005**
(21) Application number: 03380048.3
(22) Date of filing: 05.03.2003
(51) Int. Cl.: F16L 3/22

(54) **Clamp for tubular piping**
Rohrschelle für rohrförmige Leitungen
Collier de serrage pour conduites tubulaires

(30) Priority: 17.04.2002 ES 200200896
(43) Date of publication of application: 22.10.2003
(73) Proprietor: Isofix, S.L., 08192 Sant Quirze Del Valles (ES)
(72) Inventor: Yanguas Llovet, David, 08192 Sant Quirze del Valles (ES)
(74) Representative: SUGRANES - VERDONCES - FERREGÜELA

(56) References cited:
- EP-A- 0 736 713
- EP-A- 1 138 533
- WO-A-01/33128
- CH-A- 669 438
- DE-A- 3 019 303
- DE-A- 19 636 515
- GB-A- 2 111 581
- US-A- 4 564 163

## Description

### Technical sector of the invention

The invention refers to a clamp, which is especially applicable to the wall fastening of tubular piping, such as the piping used in heating or sanitary installations and, in general, to any type of fluids piping.

### Background to the invention

Well-known in the art are numerous embodiments of clamps of the type which comprise a closing cover, and more specifically, clamps with a closing cover for fastening tubular piping to walls, ceilings or any other surface.

At present, different embodiments of clamps of the type which present a closing cover exist. In some cases, said closing cover is joined in a fixed way to the main body by one of its ends, and in other cases the closing cover is independent of the main body of the clamp and is coupled to the same, once the tubular piping has been placed in the inside of the clamp.

Document CH-A-669438 refers to a clamp for holding cylinders, and pipes in particular, which has two curved parts from a base which fits on the pipe, and a clasp which is hinged from one of those parts and can engage the other part. There are engaging points on at least one of the parts concerned, and the flexible curved clasp has a smaller radius of curvature than the two parts mentioned when they are in the open/ disengaged position.

The drawback of the majority of the previously described type of clamps is that the closing cover they incorporate carries out a function which solely consists of joining the two arms of the clamp in such a way that the tubular piping cannot be uncoupled accidentally and in providing the clamp with greater robustness. This type of clamp allows for a very reduced margin of dimensional tolerance, since, in the event of the tubular piping being of a slightly superior diameter to that pre-established for the clamp, the latter's ends open slightly and it is not possible to close the closing cover.

From the aforementioned, it can be deduced that each clamp is only valid for coupling tubular piping of a certain diameter and a variation in the diameter of the tubular piping prevents the closing cover from carrying out its function correctly. As a consequence of the above, the known clamps do not permit a provisional fastening of the tubular piping, that is, it is very difficult to change the position of the pipe once the latter has been placed in the inside of the clamp, since the intensity of the grip which the clamp exerts on the tubular piping is done exclusively by the clamp arms, that is, when the tubular piping is placed in the inside of the clamp, it is not possible to slide said pipe, it being necessary to uncouple the pipe from the clamp and subsequently place it once again in the new position considered suitable. On some occasions this occurrence can be repeated several times before positioning the tubular piping in its final position.

Another problem that some known embodiments of clamps with a closing cover also present is the difficulty in opening the closing cover when the tubular piping is inside the clamp, stemming from the high degree of rigidity of the material that clamps are usually composed of, generally a non-flexible, or very inflexible, material.

Also highlighted herein is the fact that the majority of the currently known clamps with closing cover cannot be linked frontally, since they do not have means for being coupled by frontal pressure, for example, in the inside of a guide and only allow for side coupling, in such a way that, if a clamp has to be added consecutively with others placed in a guide, all the clamps must be moved in the inside of the guide until the last one juts out in order to be able to add more clamps; therefore, this manoeuvre requires the uncoupling of the pipes from each clamp in the inside of the guide so that they are free and can be moved.

### Explanation of the invention

With the aim of contributing a solution to the earlier described problems stemming from the lack of tolerance of the clamps, and/or not having provisional fastening means, and/or not having frontal linking means, a clamp of new structure has been created, which at the same time fulfils all the technological performance requirements to make possible all the previously described functions.

The clamp object of the present invention is of the type which comprises a main body, provided with a rectangular base, which in turn is provided with fastening means, and with two arms which form a large curved surface on the inside, and also provided with a flexible closing cover which, being joined integrally to the upper end of one of the two arms of the main body, is able to mechanically engage in a closing cog situated at the upper end of the other arm, called the free arm.

In essence, the clamp for tubular piping object of the present invention is characterised in that the closing cover has at least one closing cog, all adapted in such a way that, should it be necessary, the closing cover stretches in order to assure a suitable fit to different pipe diameters with a range of tolerance, and in that each of the longer sides of the rectangular base is provided with two longitudinal slide grooves that extend along their entire length, being located in opposite positions in twos, at different heights, and each pair of grooves having a different depth to the other.

According to a preferred form of embodiment of the clamp of the invention, the arm or free arm comprises a first inside extension and a second outside extension, said first inside extension is the one which, with the arm, determines the curved surface, whereas the second outside extension is provided with the closing cog and is capable of being coupled to the teeth by elastic deformation.

According to another form of preferred embodiment, the ends of the respective arm and of the arm extension of the main body are reciprocally distanced, thus determining a mouth width that is smaller than the nominal diameter of the pipe to be fastened, which, in concordance with the inner diameter space adjusted to the inner face of said arms, allows for the autonomous fastening of the pipe, or, that is, without help from the cover, even when the pipes are slightly greater or inferior to the theoretical diameter of the pipe envisaged for the clamp.

Furthermore, the closing cover of the clamp of the invention presents a protuberance on its outer surface, which makes it easier to apply pressure during the closing manoeuvre, thus avoiding the movement of the fingers or the tool being used.

According to another form of preferred embodiment, the base of the clamp is fitted with linking means which allows for the coupling of two consecutive clamps by lateral sliding and also by reciprocal frontal pressure, and are made up of a long protuberance located on one of the shorter-length faces of the main body of the clamp, which has a narrow rectangular body and a retaining head, and of a guide-groove, also long, located on the opposite face of the main body and of dimensions and shapes which are complementary to those of the previously mentioned protuberance, so they can be smoothly coupled to each other by lateral sliding and so that they can also be coupled by elastic deformation when two facing clamps are frontally pressed against the other by respective protuberance and guide-groove.

The longitudinal slide grooves are fitted with position retention means which avoid the inertial movement of the fastened element along the guide rail.

According to another form of preferred embodiment, the position retention means comprise at least one protuberance arranged in at least one of the walls that form each of the respective grooves.

In accordance with another example of preferred embodiment, the fastening means comprise a rectangular-shaped intermediate transition zone situated between the two arms, an elongated orifice and a partition which allows for the quick and precise coupling of a tool for fastening the clamp in the final position.

According to one example of preferred embodiment, the base of the clamp incorporates an extension provided with expandable ribs, as if they were pads, adapted for receiving a fastening screw.

According to another preferred mode of embodiment, the upper end of the free arm is provided with a plurality of teeth which enhance the reliability and precision of the closing cover.

The described features of the clamp for tubular piping according to the invention contribute towards a solution to the previously described drawbacks that known embodiments of clamps present.

### Brief description of the drawings

An embodiment example of the clamp for tubular piping object of the present invention is represented in the attached drawings. In said drawings,
Fig. 1 is a frontal view in perspective of the clamp in accordance with the present invention in open position;
Fig. 2 is another view in perspective of the clamp of the invention in closed position;
Fig. 3 shows another view in perspective of the clamp in closed position;
Fig. 4 is a front elevation view of the clamp of the invention;
Fig. 5 is a side elevation view in section of the clamp in Fig. 4;
Fig. 6 shows a view of the clamp object of the invention in accordance with another form of embodiment; and
Fig. 7 shows another example of embodiment of the clamp of the invention.

### Detailed description of the drawings

The description which follows refers to the previously explained drawings, which make it possible to appreciate in detail the different parts that the clamp is made up of, and in particular those of the clamp which, as an example of embodiment, is described.

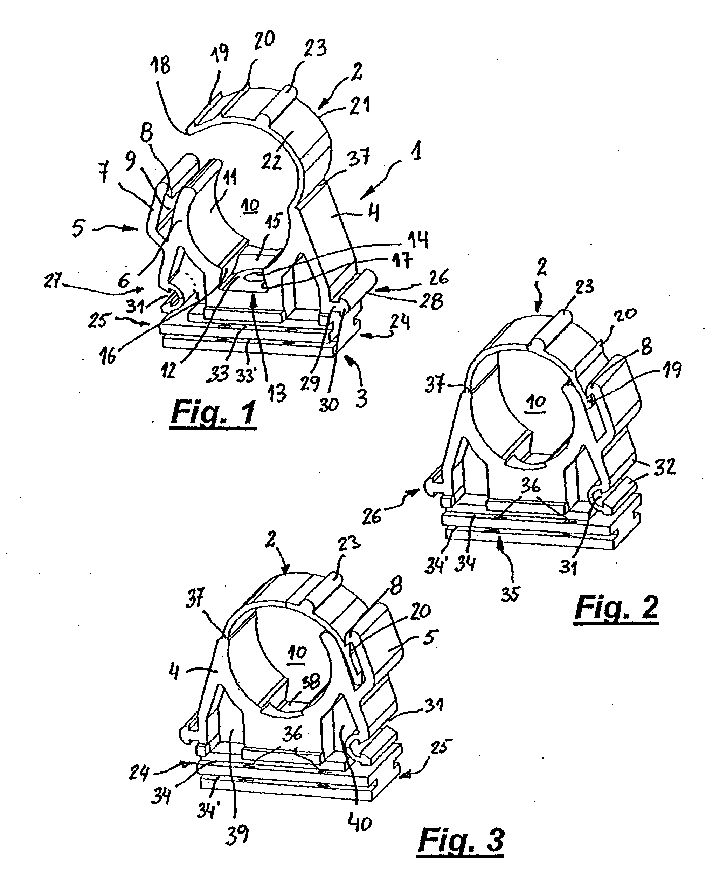

As can be appreciated in Figs. 1 to 3, the clamp object of the invention consists of two clearly differentiated parts, a first part formed by the main body 1 and a second part formed by the closing cover 2.

The main body 1 is provided with a rectangular base 3 which is the point of union between the clamp and the surface to which it has to be fixed.

Above the base 3, the main body is fitted with two arms which internally form a curved surface, a first arm 4, which is joined to the closing cover 2, and a second arm or free arm 5.

Near to its end, the free arm 5 unfolds into two extensions; a first inside extension 6 and a second outside extension 7, which has a closing cog 8, which is an extension towards the inside of its upper end.

The arrangement of the extensions 6 and 7 of the free arm 5 determines an intermediate space 9 suitable for receiving the end of the closing cover.

Together, the arms 4 and 5 form an essentially circumferential inside space 10, defined by a curved surface 11, interrupted by the transitional intermediate zone 12 between the arms 4 and 5, which are rectangular in shape and extend towards the base 3 of the clamp. In this way, very good accessibility to the fastening means 13 of the clamp is achieved.

The ends of the respective arm 4 and of the arm 5 extension 6 of the main body 1 are reciprocally distanced, thus determining a mouth width a that is smaller than the nominal diameter of the pipe to be fastened, which, in concordance with the inner diameter space adjusted to the inner face of said arms, allows for the autonomous fastening of the pipe, or, that is, without help from the cover, even when the pipes are slightly greater or inferior to the theoretical diameter of the pipe envisaged for the clamp.

The fastening means 13 of the clamp comprise an elongated orifice 14 that goes through the base 3, and a partition 15, whose function is to ease the rapid coupling of an external tool in order to put a fastening element such as a screw.

In the embodiment example shown, the side walls 16 and 17 of the transition zone 12 between the arms 4 and 5 have a slight incline whose purpose is to further aid the use of external tools for fastening the clamp. The features of the example represented enable a worker to fix the clamp position easily and simply.

The closing cover 2 is of flexible material and at its free end 18 forms a first closing cog 19 and in the zone near the free end 18, a second closing cog 20, both extending outwards and are complementary to the closing cog 8 of the free arm 5 so that they adapt when the closing cover 2 is in closed position, as can be appreciated in Figs. 1, 2, 3, 4 and 6.

The closing cover 2 presents a curvature 21 towards the outside of the clamp which acts as a spring in the closing manoeuvre of same.

In Figs. 1 to 4 and 6 it can be appreciated that the outside surface 22 of the closing cover 2 has a protuberance 23 that eases the closing manoeuvre of the cover by manual pressure and at the same time avoids the fingers from slipping or even the tool being used in order to carry out said closing manoeuvre.

Each of the shorter-length sides 24 and 25 of the clamp have respective linking means 26 and 27 located in the zone close to the base 3 of the clamp.

On the shorter-length side 24 corresponding to the arm 4, the linking means 26 of the clamp comprise an elongated protuberance 28, said protuberance 28 being made up of a relatively short-length rectangular body 29 and a retaining head 30 located at the end of the protuberance 28 furthest away from the clamp.

The linking means 27 situated on the shorter-length side 25 opposite the previous one, consist of a longitudinal guide-groove 31. The guide-groove has dimensions which are adapted in order to be able to adapt in its inside, by lateral sliding, the protuberance 28 of an adjoining clamp.

In addition, the guide-groove 31 has on its most outer ends, widened portions 32 provided with an inward slope so that it eases the linking by frontal pressure of a protuberance 28 with a guide-groove 31 of two consecutive clamps. The linking by frontal pressure is of useful application when two or more clamps are coupled to each other, assembled inside a guide-rail, and one wishes to add more clamps to said guide-rail. In order to ease the linking by frontal pressure, the length of the guide-groove is slightly less than that of the base, as this way avoids interference when two clamps assembled on a guide-rail by frontal pressure are coupled.

In Figs. 1 to 3 it can be appreciated that each of the longer sides of the base 3 comprise two longitudinal slide grooves 33, 33' and 34, 34'. These grooves are respectively paired to those of the same level, forming the pairs 33-34 and 33'-34', each pair being of a different depth in a way that is convenient for making possible the assembly of the clamp on a guide-rail.

The existence of these two pairs of grooves 33-34 and 33'-34' to each side enables the clamp to be comfortably adaptable to different types of guide-rails.

Each of the mentioned grooves 33, 33', 34 and 34' is provided with retention means 35 of the position in the guide-rail consisting of projections 36 which increase the friction between the walls of the groove and the guide-rail ribs and guarantee that, once the clamp is assembles in its rail, it does not move freely.

The closing cover 2 is joined to the arm 4 by means of a hinge 37.

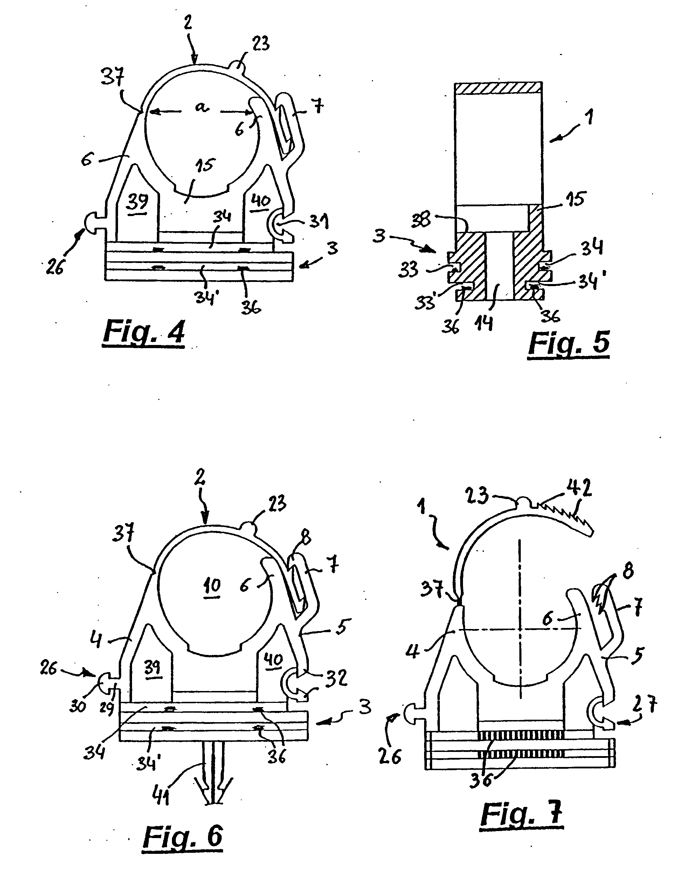

In Figs. 1 and 5 it is appreciated that the base 3 of the clamp is fitted with an elongated orifice 14 which is dimensioned in order to be able to apply any type of screw, screw spike, wall plug with built-in screw thread, or drill with a diameter suitable for the self-threading of a screw or similar.

In Fig. 5 the orifice 14 is observed, which vertically goes through the whole of base 3 of the clamp coming from the intermediate zone 12. In principle, the orifice 14 does not have inner threading, thus strengthening the union of the screw with the clamp.

The orifice 14 has a gripping surface 38 for the screw head. This gripping surface 28 for the screw head is an important element so that the union between the clamp and the surface support of the same has greater consistency.

The widest part of each of the arms 4 and 5 has a respective central partition 39, 40 which provides the clamp with greater strength.

In Fig. 6 another embodiment example of the clamp of the invention is shown, incorporating an extension 41 in the form of a plug. Said extension 41 is provided with expandable flaps and is adapted for receiving a screw, and by expanding its constituent parts, for fixing the clamp to the support surface of same.

Fig. 7 shows another embodiment example of the clamp of the invention in which the extension 7 of the free arm 5 is fitted with a plurality of closing teeth 8, whereas the closing cover 2 is also fitted with a plurality of closing teeth 42. According to this mode of embodiment of the clamp of the invention, increased reliability and precision in the closing of the cover is achieved.

Furthermore, in the example shown in Fig. 7, the projections 36 of the retention means 35 of the position arranged in the longitudinal grooves 33, 33', 34 and 34' are arranged in the respective frontal wall of each groove.

## Claims

1. Clamp for tubular piping of the type which comprises a main body (1) provided with a rectangular base (3), which in turn is provided with fastening means (13), and with two arms (4, 5) which form a large curved surface (11) on the inside, and also provided with a flexible closing cover (2) which, being joined integrally to the upper end of one of the two arms (4) of the main body (1), is able to mechanically engage in a closing cog (8) situated at the upper end of the other arm (5), called the free arm, **characterised in that** the closing cover (2) has at least one closing cog (19, 20), all adapted in such a way that, should it be necessary, the closing cover (2) stretches to assure a suitable fit to different pipe diameters with a range of tolerance, and **in that** each of the longer sides of the rectangular base (3) is provided with two longitudinal slide grooves (33, 33', 34, 34') that extend along their entire length, being located in opposite positions in twos, at different heights, and each pair of grooves (33-34, and 33'-34') having a different depth to the other.

2. Clamp for tubular piping according to claim 1, **characterised in that** the arm or free arm comprises a first inside extension (6) and a second outside extension (7), said first inside extension (6) is the one which, with the arm (4), determines the curved surface (11), whereas the second outside extension (7) is provided with the closing cog (8) and is capable of being coupled to the teeth (19, 20) by elastic deformation.

3. Clamp for tubular piping according to any one of claims 1 and 2, **characterised in that** the ends of the respective arm (4) and of the arm (5) extension (6) of the main body (1) are reciprocally distanced, thus determining a mouth width (a) that is smaller than the nominal diameter of the pipe to be fastened, which, in concordance with the inner diameter space (10) fitting the inner face of said arms, allows for the autonomous fastening of the pipe, or, that is, without help from the cover (2), even when the pipes are slightly greater or inferior to the theoretical diameter of the pipe envisaged for the clamp.

4. Clamp for tubular piping according to any one of claims 1 to 3, **characterised in that** the closing cover (2) presents, on its outer surface (22), a protuberance (23) which makes it easier to apply pressure during the closing manoeuvre, thus avoiding the movement of the fingers or the tool being used.

5. Clamp for tubular piping according to any one of claims 1 to 4, **characterised in that** the base (3) is fitted with linking means (26, 27) which allows for the coupling of two consecutive clamps by lateral sliding and also by reciprocal frontal pressure, and are made up of a long protuberance (28) located on one of the shorter-length faces (24) of the main body (1) of the clamp, which has a narrow rectangular body (29) and a retaining head (30), and of a guide-groove (31), also long, located on the opposite face (25) of the main body (1) and of dimensions and shapes which are complementary to those of the previously mentioned protuberance (28), so they can be smoothly coupled to each other by lateral sliding and so that they can also be coupled by elastic deformation when two facing clamps are frontally pressed against the other by respective protuberance (28) and guide-groove (31).

6. Clamp for tubular piping according to any one of claims 1 to 5, **characterised in that** the longitudinal slide grooves (33, 33', 34, 34') are fitted with position retention means (35) which avoid the inertial movement of the fastened element along the guide rail.

7. Clamp for tubular piping according to claim 6, **characterised in that** the position retention means (35) comprise at least one protuberance (36) arranged in at least one of the walls that form each of the respective grooves (33, 33', 34, 34').

8. Clamp for tubular piping according to claim 1, **characterised in that** the fastening means comprise a rectangular-shaped intermediate transition zone (12) situated between the two arms (4, 5), an elongated orifice (14) and a partition (15) which allows for the quick and precise coupling of a tool for fastening the clamp in the final position.

9. Clamp for tubular piping according to any of the claims 1 to 8, **characterised in that** the base (3) of the clamp incorporates an extension (41) provided with expandable ribs, as if they were pads, adapted for receiving a fastening screw.

10. Clamp for tubular piping according to any one of the previous claims, **characterised in that** the upper end of the free arm (5) is provided with a plurality of teeth (8).

## Patentansprüche

1. Rohrleitungsschelle des Typs, der einen Hauptkörper (1) umfasst, der mit einer rechtwinkligen Basis (3), die ihrerseits mit Befestigungsmitteln (13) versehen ist, und mit zwei Armen (4, 5), die an der Innenseite eine große gekrümmte Oberfläche (11) bilden, versehen ist und außerdem mit einer flexiblen Verschlussabdeckung (2) versehen ist, die mit dem oberen Ende eines der zwei Arme (4) des Hauptkörpers (1) einteilig verbunden ist und mit einem Verschlusszahn (8), der sich am oberen Ende des anderen, so genannten freien Arms (5) befindet, in mechanischen Eingriff gelangen kann, **dadurch gekennzeichnet, dass** die Verschlussabdeckung (2) wenigstens einen Verschlusszahn (19, 20) besitzt, die alle in der Weise beschaffen sind, dass sich die Verschlussabdeckung (2) nötigenfalls dehnt, um eine geeignete Anpassung an verschiedene Rohrdurchmesser mit einem Toleranzbereich zu gewährleisten, und dass jede der längeren Seiten der rechtwinkligen Basis (3) mit zwei longitudinalen Gleitnuten (33, 33', 34, 34') versehen ist, die sich über deren gesamte Länge erstrecken, wobei sich Paare von Nuten, die an gegenüberliegenden Positionen vorhanden sind, auf unterschiedlichen Höhen befinden, wobei die Nuten eines Paars (33-34 und 33'-34') eine andere Tiefe als jene des anderen Paars (33'-34' und 33-34) aufweisen.

2. Rohrleitungsschelle nach Anspruch 1, **dadurch gekennzeichnet, dass** der Arm oder freie Arm eine erste innere Verlängerung (6) und eine zweite äußere Verlängerung (7) umfasst, wobei die erste innere Verlängerung (6) jene ist, die zusammen mit dem Arm (4) die gekrümmte Oberfläche (11) festlegt, während die zweite äußere Verlängerung (7) mit dem Verschlusszahn (8) versehen ist und mit den Zähnen (19, 20) durch elastische Verformung gekoppelt werden kann.

3. Rohrleitungsschelle nach einem der Ansprüche 1 und 2, **dadurch gekennzeichnet, dass** die Enden des Arms (4) und der Verlängerung (6) des Arms (5) des Hauptkörpers (1) wechselseitig so beabstandet sind, dass eine Öffnungsweite (a) festgelegt ist, die kleiner als der Nenndurchmesser des zu befestigenden Rohrs ist, was in Zusammenwirkung mit dem Innendurchmesserraum (10), der durch die Innenfläche der Arme definiert ist, die selbstständige Befestigung des Rohrs, d. h. ohne Hilfe durch die Abdeckung (2), zulässt, selbst wenn die Rohre etwas größer oder kleiner als der theoretische Durchmesser des für die Schelle vorgesehenen Rohrs sind.

4. Rohrleitungsschelle nach einem der Ansprüche 1 bis 3, **dadurch gekennzeichnet, dass** die Verschlussabdeckung (2) auf ihrer äußeren Oberfläche (2) einen Vorsprung (23) aufweist, der die Ausübung eines Drucks während des Verschließvorgangs erleichtert, da eine Bewegung der Finger oder des verwendeten Werkzeugs vermieden wird.

5. Rohrleitungsschelle nach einem der Ansprüche 1 bis 4, **dadurch gekennzeichnet, dass** die Basis (3) mit Verbindungsmitteln (26, 27) versehen ist, die die Kopplung zweier aufeinander folgender Schellen durch seitliches Gleiten und außerdem durch einen hin und her gerichteten frontalen Druck ermöglichen und gebildet sind aus einem langen Vorsprung (28), der sich auf einer der Flächen (24) des Hauptkörpers (1) der Schelle mit kürzerer Länge befindet und einen schmalen rechtwinkligen Körper (29) und einen Rückhaltekopf (30) besitzt, und aus einer Führungsnut (31), die ebenfalls lang ist und sich auf der gegenüberliegenden Fläche (25) des Hauptkörpers (1) befindet und Abmessungen und Formen besitzt, die zu jenen des oben erwähnten Vorsprungs (28) komplementär sind, so dass sie durch seitliches Gleiten gleichmäßig gekoppelt und außerdem durch elastische Verformung gekoppelt werden können, wenn zwei einander zugewandte Schellen über den entsprechenden Vorsprung (28) und die entsprechende Führungsnut (31) frontal gegeneinander gepresst werden.

6. Rohrleitungsschelle nach einem der Ansprüche 1 bis 5, **dadurch gekennzeichnet, dass** die longitudinalen Gleitnuten (33, 33', 34, 34') mit Positionsaufrechterhaltungsmitteln (35) versehen sind, die eine Trägheitsbewegung des befestigten Elements längs der Führungsschiene verhindern.

7. Rohrleitungsschelle nach Anspruch 6, **dadurch gekennzeichnet, dass** die Positionsaufrechterhaltungsmittel (35) wenigstens einen Vorsprung (36) aufweisen, der in wenigstens einer der Wände angeordnet ist, die die jeweiligen Nuten (33, 33', 34, 34') bilden.

8. Rohrleitungsschelle nach Anspruch 1, **dadurch gekennzeichnet, dass** die Befestigungsmittel eine rechtwinklig geformte Zwischenübergangszone (12), die sich zwischen den beiden Armen (4, 5) befindet, eine lang gestreckte Öffnung (14) und eine Trennwand (15), die eine schnelle und präzise Kopplung eines Werkzeugs für die Befestigung der Schelle in der Endposition ermöglicht, aufweisen.

9. Rohrleitungsschelle nach einem der Ansprüche 1 bis 8, **dadurch gekennzeichnet, dass** die Basis (3) der Schelle eine Verlängerung (41) aufweist, die mit ausdehnbaren Rippen versehen ist, die wie Wulste beschaffen sind und eine Befestigungsschraube aufnehmen können.

10. Rohrleitungsschelle nach einem der vorhergehenden Ansprüche, **dadurch gekennzeichnet, dass** das obere Ende des freien Arms (5) mit mehreren Zähnen (8) versehen ist.

## Revendications

1. Collier de serrage pour conduites tubulaires du type qui comprend un corps principal (1) muni d'une base rectangulaire (3), qui est à son tour munie d'un moyen de fixation (13), et de deux bras (4, 5) qui forment une grande surface incurvée (11) sur l'intérieur, et également muni d'un couvercle de fermeture flexible (2) qui, lorsqu'il est solidaire de manière à faire corps avec l'extrémité supérieure de l'un des deux bras (4) du corps principal (1), peut entrer mécaniquement en prise dans une dent de fermeture (8) située au niveau de l'extrémité supérieure de l'autre bras (5), appelé bras libre, **caractérisé en ce que** le couvercle de fermeture (2) possède au moins une dent de fermeture (19, 20), toutes adaptées d'une manière telle que, si nécessaire, le couvercle de fermeture (2) s'étire pour garantir un ajustement approprié aux différents diamètres de conduite avec une plage de tolérance, et **en ce que** chacun des côtés plus longs de la base rectangulaire (3) est équipé de deux rainures coulissantes longitudinales (33, 33', 34, 34') qui s'étendent sur toute leur longueur, en étant situées dans des positions opposées par deux, à différentes hauteurs, et chaque paire de rainures (33 - 34 et 33' - 34') ayant une profondeur différente l'une par rapport à l'autre.

2. Collier de serrage pour conduites tubulaires selon la revendication 1, **caractérisé en ce que** le bras ou bras libre comprend une première extension interne (6) et une seconde extension externe (7), ladite première extension interne (6) est celle qui avec le bras (4), détermine la surface incurvée (11), tandis que la seconde extension externe (7) est munie de la dent de fermeture (8) et peut être couplée aux dents (19, 20) par déformation élastique.

3. Collier de serrage pour conduites tubulaires selon l'une quelconque des revendications 1 et 2, **caractérisé en ce que** les extrémités du bras respectif (4) et de l'extension (6) de bras (5) du corps principal (1) sont à égale distance, déterminant ainsi une largeur (a) d'entrée qui est inférieure au diamètre (a) nominal de la conduite à fixer, ce qui, en concordance avec l'espace (10) de diamètre interne raccordant la face interne desdits bras, permet la fixation autonome de la conduite, c'est-à-dire sans l'aide du couvercle (2), même lorsque les conduites sont légèrement plus grandes ou inférieures au diamètre théorique de la conduite envisagé pour le collier de serrage.

4. Collier de serrage pour conduites tubulaires selon l'une quelconque des revendications 1 à 3, **caractérisé en ce que** le couvercle de fermeture (2) présente, sur sa surface externe (22), une protubérance (23) qui facilite l'application de pression pendant la manoeuvre de fermeture, en évitant ainsi le mouvement des doigts ou l'utilisation de l'outil.

5. Collier de serrage pour conduites tubulaires selon l'une quelconque des revendications 1 à 4, **caractérisé en ce que** la base (3) est équipée de moyens de liaison (26, 27), ce qui permet le couplage de deux colliers de serrage consécutifs par coulissement latéral et également par pression frontale réciproque, et sont composés d'une longue protubérance (28) située sur l'une des faces plus courtes (24) du corps principal (1) du collier de serrage, qui a un corps rectangulaire étroit (29) et une tête de retenue (30), et d'une rainure de guidage (31) également longue, située sur la face opposée (25) du corps principal (1) et avec des dimensions et des formes qui sont complémentaires de celles de la protubérance (28) précédemment mentionnée, de sorte qu'elles peuvent être couplées de manière régulière entre elles par coulissement latéral et de sorte qu'elles peuvent également être couplées par déformation élastique lorsque deux colliers de serrage se faisant face sont comprimés de manière frontale l'un contre l'autre par la protubérance (28) et la rainure de guidage (31) respectives.

6. Collier de serrage pour conduites tubulaires selon l'une quelconque des revendications 1 à 5, **caractérisé en ce que** les rainures coulissantes longitudinales (33, 33', 34, 34') sont montées avec des moyens de retenue de position (35) qui évitent le mouvement d'inertie de l'élément fixé le long du rail de guidage.

7. Collier de serrage pour conduites tubulaires selon la revendication 6, **caractérisé en ce que** les moyens de retenue de position (35) comprennent au moins une protubérance (36) agencée dans au moins l'une des parois qui forment chacune des rainures (33, 33', 34, 34') respectives.

8. Collier de serrage pour conduites tubulaires selon la revendication 1, **caractérisé en ce que** les moyens de fixation comprennent une zone de transition intermédiaire (12) de forme rectangulaire située entre les deux bras (4, 5), un orifice allongé (14) et une séparation (15) qui permet un couplage rapide et précis d'un outil pour fixer le collier de serrage dans la position finale.

9. Collier de serrage pour conduites tubulaires selon l'une quelconque des revendications 1 à 8, **caractérisé en ce que** la base (3) du collier de serrage comprend une extension (41) prévue avec des nervures extensibles, comme si c'était des languettes, adaptées pour recevoir une vis de fixation.

10. Collier de serrage pour conduites tubulaires selon l'une quelconque des revendications précédentes, **caractérisé en ce que** l'extrémité supérieure du bras libre (5) est prévue avec une pluralité de dents (8).
